Europäisches Patentamt

**European Patent Office**

**Office européen des brevets**

(19)

(11) Numéro de publication : **0 023 452**
**B1**

(12) FASCICULE DE BREVET EUROPÉEN

(45) Date de publication du fascicule du brevet :
26.01.83

(51) Int. Cl.³ : **G 03 G 19/00**, G 06 K 15/14

(21) Numéro de dépôt : **80401089.0**

(22) Date de dépôt : **22.07.80**

(54) Perfectionnements apportés aux dispositifs d'impression à encre magnétique pulvérulente.

(30) Priorité : 24.07.79 FR 7919113

(43) Date de publication de la demande :
04.02.81 Bulletin 81/05

(45) Mention de la délivrance du brevet :
26.01.83 Bulletin 83/04

(84) Etats contractants désignés :
AT BE CH DE GB IT LI LU NL SE

(56) Documents cités :
FR A 2 233 774
FR A 2 325 511
FR A 2 385 112

(73) Titulaire : **SOCIETE D'APPLICATIONS GENERALES D'ELECTRICITE ET DE MECANIQUE S A G E M**
**6, Avenue d'Iéna**
**F-75783 Paris Cedex 16 (FR)**

(72) Inventeur : **Dol, Christian**
**8, Allée de la Gambaderie**
**F-91190 Gif Sur Yvette (FR)**
Inventeur : **Valet, Jean-Yves**
**23, Avenue du Parc**
**F-95250 Beauchamp (FR)**

(74) Mandataire : **Jacquelin, Marc-Henri et al**
**Cabinet PLASSERAUD 84, rue d'Amsterdam**
**F-75009 Paris (FR)**

## Perfectionnements apportés aux dispositifs d'impression à encre magnétique pulvérulente

L'invention est relative aux dispositifs d'impression du genre de ceux qui mettent en œuvre une impression magnétique, provoquée par l'action de têtes d'induction magnétique sur une couche mince magnétique, et une impression visible provoquée par l'encrage de l'impression magnétique au moyen d'une encre magnétique solide pulvérulente et le transfert de cet encrage, par contact, sur une feuille de papier ordinaire mise en appui sur cette couche mince.

Pour que de tels dispositifs d'impression puissent être fabriqués avec un prix de revient acceptable pour être utilisés dans des appareils de grande diffusion (par exemple dans des télécopieurs ou des terminaux d'ordinateurs), il est avantageux d'avoir recours à des têtes d'induction magnétique de type « intégré ».

De telles têtes d'induction magnétique intégrées sont obtenues par dépôt sous vide sur des substrats appropriés et sont actuellement utilisées dans les dispositifs à mémoire à disques où elles assurent la gravure et la lecture des disques.

Ces têtes d'induction magnétique intégrées peuvent être assemblées par groupes, par exemple de vingt têtes, l'espacement entre chaque tête pouvant être réduit à 0,125 mm, ce qui donne huit têtes par millimètre, donc huit impressions magnétiques et huit impressions visibles.

Cependant, la durée de vie de ces têtes d'induction magnétique intégrées dépend essentiellement de la propreté de l'atmosphère dans laquelle ces têtes travaillent. En particulier, ces têtes sont soumises à une usure rapide dès que des grains de poussière s'interposent entre leur surface et la couche à imprimer magnétiquement.

De plus, les particules d'encre magnétique peuvent provoquer très rapidement l'usure des têtes d'induction magnétique intégrées.

Or, on conçoit que, si l'on veut réaliser un dispositif d'impression rapide (ce que l'on peut envisager puisque l'impression magnétique s'effectue à l'échelle de la micro-seconde), on a intérêt à disposer d'une source d'encre magnétique pulvérulente dont les particules sont parfaitement libres pour venir très rapidement couvrir les impressions magnétiques. Par ailleurs, on cherche aussi à réaliser un dispositif d'impression compact, et la source d'encre magnétique pulvérulente devra se trouver à proximité du poste d'impression magnétique, donc des têtes.

Faute de précautions spéciales, on risque donc de voir les têtes d'induction magnétique dans un environnement où se trouveront, en grand nombre, des particules d'encre magnétique, et la durée de vie de ces têtes sera anormalement abrégée : on ne peut donc pas avoir recours à des dispositifs d'impression classiques (tels que celui décrit dans le brevet FRANCE n° 2 233 774) et dans lequel les têtes d'induction magnétiques sont portées par un tambour, le balayage se faisant alors électroniquement. En effet, outre la nécessité de faire appel à un balayage électronique, les têtes d'induction intégrées non protégées seraient rapidement usées par les particules d'encre magnétique.

L'invention a précisément pour but de remédier à cet inconvénient.

A cet effet, le dispositif d'impression comporte un tambour défilant animé d'un mouvement de défilement par l'action de premiers moyens moteurs, ledit tambour défilant présentant, sur sa surface, une couche mince magnétique ; un support balayant animé d'un mouvement de va-et-vient pas à pas, perpendiculaire au mouvement de défilement du tambour défilant, par l'action de seconds moyens moteurs, ledit support balayant portant un ou de préférence plusieurs groupes de têtes d'induction magnétique intégrées, ce groupe de têtes étant connecté à des moyens de commande séquentiels ; des moyens d'alimentation en encre pulvérulente magnétique ; et des moyens d'alimentation en papier ordinaire ; et il est caractérisé par le fait que le support balayant présente une forme annulaire entourant le tambour défilant sur une partie importante au moins de son étendue circonférentielle, ce support balayant comportant deux parties latérales entourant une partie centrale, les deux parties latérales étant agencées pour créer une étanchéité entre elles et la surface du tambour défilant ; par le fait que la partie centrale porte le ou les groupes de têtes d'induction magnétique intégrées ; par le fait que des moyens d'alimentation en gaz comprimé débouchent dans cette partie centrale ; et par le fait que les moyens d'alimentation en encre pulvérulente magnétique débouchent à l'extérieur du support balayant.

Selon un mode de réalisation avantageux de l'invention, les moyens d'alimentation en encre pulvérulente comportent deux rampes de distribution disposées respectivement sur les côtés extérieurs des deux parties latérales du support balayant, des moyens de distribution étant prévus pour alimenter en encre l'une ou l'autre des deux susdites rampes suivant le sens du mouvement de va-et-vient du support balayant.

L'invention consiste, mises à part les dispositions dont il vient d'être question, en certaines autres dispositions qui s'utilisent de préférence en même temps et dont il sera plus explicitement question ci-après.

L'invention pourra, de toute façon, être bien comprise à l'aide du complément de description qui suit, ainsi que des dessins annexés, lesquels complément et dessins sont relatifs à un mode de réalisation préféré de l'invention et ne comportent, bien entendu, aucun caractère limitatif.

La figure 1, de ces dessins, montre, en coupe schématique, un dispositif d'impression établi conformément à l'invention.

La figure 2 est une coupe selon II-II fig. 1.

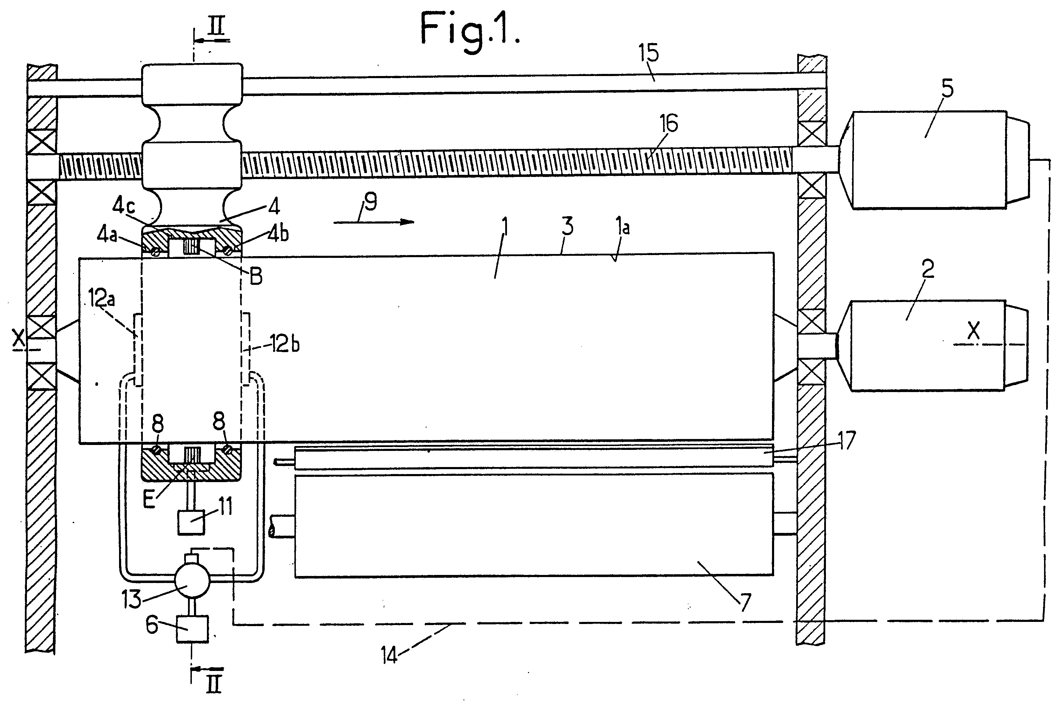

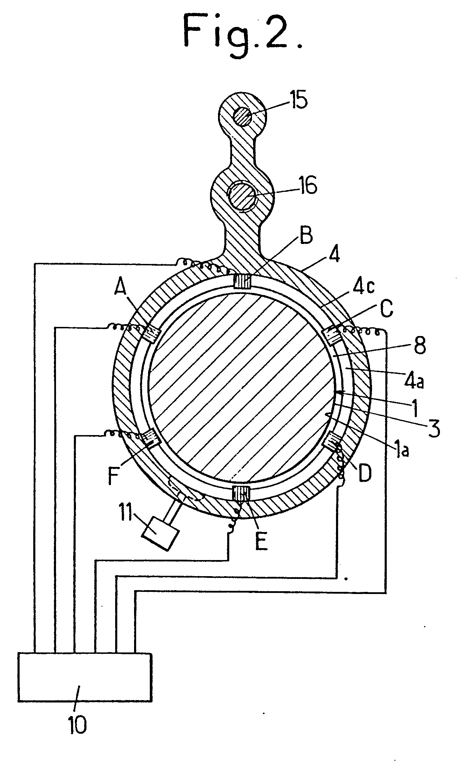

Sur les fig. 1 et 2, on a montré un dispositif d'impression qui comporte un tambour défilant 1 qui peut avantageusement être constitué par un rouleau cylindrique tournant autour d'un axe XX sous l'action de premiers moyens moteurs 2. Il convient cependant de remarquer qu'un tel tambour défilant pourrait être constitué par une bande sans fin circulant autour d'une pluralité de rouleaux d'axes parallèles.

Ce tambour défilant 1 présente, sur sa surface $1_a$, une couche mince magnétique 3.

Un support balayant 4 est prévu pour coopérer avec le tambour défilant 1 ; ce support balayant 4 est animé d'un mouvement de va-et-vient pas à pas, perpendiculaire au mouvement de défilement du tambour défilant 1. A cet effet, des seconds moyens moteurs 5 sont prévus.

Le support balayant 4 porte plusieurs groupes de têtes d'induction magnétique intégrées A, B, C, D..., chaque groupe pouvant comporter vingt têtes.

Des moyens d'alimentation, désignés d'une façon générale par le chiffre de référence 6, sont prévus pour l'alimentation en encre pulvérulente magnétique.

Des moyens d'alimentation, désignés d'une façon générale par le chiffre de référence 7, sont prévus pour alimenter le tambour défilant 1 en papier ordinaire.

Le support balayant 4 présente une forme annulaire entourant le tambour défilant 1, et il comporte deux parties latérales $4_a$ et $4_b$ entourant une partie centrale $4_c$.

Ces deux parties latérales $4_a$ et $4_b$ sont agencées pour créer une étanchéité entre elles et la surface $1_a$ du tambour défilant 1.

A cet effet, chaque partie latérale $4_a$ et $4_b$ peut comporter au moins un joint d'étanchéité 8, de préférence du type à labyrinthe.

Cette partie centrale $4_c$ porte les groupes de têtes d'induction magnétique intégrées A, B, C, D... qui sont régulièrement répartis sur une circonférence de la surface interne de ladite partie centrale $4_c$.

On peut prévoir, par exemple, trois groupes de têtes à 120°, quatre groupes de têtes à 90°, six groupes de têtes à 60°, etc...

Sur les fig. 1 et 2, on a montré un mode de réalisation dans lequel six groupes de têtes sont disposés à 60°, à savoir les groupes A, B, C, D, E, F.

Le fonctionnement est alors le suivant : lorsque le tambour défilant 1 aura effectué un sixième de tour, une bande circonférentielle de vingt points magnétiques couvrant une largeur de 2,5 mm (chaque groupe de têtes comportant vingt têtes espacées de 0,125 mm) aura été imprimée magnétiquement ; le support balayant 4 avancera alors d'un pas de 2,5 mm dans le sens de la flèche 9 sur la fig. 1, pendant que le tambour défilant 1 effectuera une rotation de deux sixièmes de tour ; ensuite, on procédera à l'impression magnétique sur un autre sixième de tour, et on procédera alors à un nouveau déplacement du support balayant 4 ; et ainsi de suite jusqu'à obtenir une impression magnétique complète de la couche magnétique 3 de la surface $1_a$ du tambour défilant 1.

Si l'on souhaite imprimer visiblement sur une feuille de papier ordinaire de format normal A4, le tambour défilant 1 présentera une longueur circonférentielle d'au moins 297 mm.

En commandant les groupes de têtes A, B, C, D, E, F, simultanément, on procède alors à l'impression magnétique sur une bande de 2,5 mm de largeur et de 297 mm de longueur dans le premier sixième de tour du tambour défilant 1 ; ensuite, ce sont le deuxième et troisième sixième de tour qui seront effectués amagnétiquement (c'est-à-dire sans impression magnétique) et en même temps le support balayant 4 sera avancé d'un pas de 2,5 mm. Ensuite, pour conserver l'alignement suivant la largeur du format A4, il faudra envoyer aux groupes de têtes D, E, F (diamétralement opposés aux groupes de têtes A, B, C), les informations magnétiques correspondant à la première moitié de cette deuxième bande et simultanément aux groupes de têtes A, B, C les informations magnétiques correspondant à la seconde moitié de cette bande et ainsi de suite jusqu'à ce que le tambour soit complètement inscrit.

En d'autres termes, si l'on souhaite une disposition ligne par ligne suivant la largeur du format A4, chaque ligne est divisée en tronçons successifs de 2,5 mm qui seront imprimés magnétiquement d'un pas à l'autre par des groupes de têtes diamétralement opposés sur le support balayant 4.

Il convient alors de signaler un des avantages du dispositif d'impression selon l'invention qui permet d'utiliser une impression magnétique qui s'effectue à l'échelle de la micro-seconde alors qu'une impression directe visible (frappe matricielle dans des dispositifs d'impression électromécanique) s'effectue à l'échelle de la milliseconde. Il sera donc possible de disposer d'un temps beaucoup plus important pour effectuer une avance d'un pas, ce qui n'était pas le cas dans les dispositifs d'impression à frappe matricielle.

Avec la disposition décrite ci-dessus, dans laquelle les groupes de têtes A, B, C, D, E, F sont commandés par une permutation circulaire au pas de 3 (c'est-à-dire un groupe, puis le groupe diamétralement opposé), le rapport entre le « temps d'avance » et le « temps d'impression » peut être égal à 2, et l'impression s'opère par sixième de tour du tambour défilant 1.

Cependant, si les groupes de têtes A, B, C, D, E, F, sont commandés par une permutation circulaire au pas de 4, ou au pas de 5, le rapport temps d'avance/temps d'impression peut être égal à 3 ou à 4, et ainsi de suite.

On constate donc qu'en faisant varier le nombre des groupes de têtes A, B, C, D, E, F... et leurs moyens de commande séquentiels, désignés d'une façon générale par le chiffre de référence 10, il sera possible de choisir la vitesse de rotation du tambour défilant 1 et la cadence d'avance pas à pas du support balayant 4. Le temps de station au pas où s'effectue l'impression magnétique étant très réduit, cette cadence d'avance pas à pas du support balayant 4 sera d'ailleurs une avance pratiquement continue.

Ceci étant, on prévoit des moyens d'alimentation, désignés d'une façon générale par le chiffre de référence 11, pour alimenter la partie centrale $4_c$ du support balayant 4 par un gaz comprimé dont la pression est supérieure à la pression ambiante.

Par ailleurs, les moyens d'alimentation en encre pulvérulente magnétique 6 sont agencés de sorte qu'ils débouchent à l'extérieur du support balayant 4.

Grâce à cette disposition, l'atmosphère de la partie centrale $4_c$ du support balayant 4, dans laquelle se trouvent les groupes de têtes A, B, C, D, E, F est toujours en surpression par rapport à l'atmosphère ambiante entourant le support balayant 4, et, de ce fait, il est impossible aux diverses poussières, et plus particulièrement aux particules d'encre magnétique, de pénétrer dans cette partie centrale $4_c$.

Les moyens d'alimentation en encre pulvérulente magnétique 6 débouchent avantageusement dans deux rampes de distribution $12_a$ et $12_b$ accolées respectivement aux deux parties latérales $4_a$ et $4_b$ du support balayant 4, un distributeur 13 étant prévu pour alimenter successivement la rampe de distribution $12_a$ et la rampe de distribution $12_b$ suivant le sens du mouvement de va-et-vient du support balayant 4. Lorsque le support balayant 4 se déplace dans le sens de la flèche 9, c'est la rampe de distribution $12_a$ qui est alimentée en encre pulvérulente magnétique, et, dans le sens inverse, c'est la rampe de distribution $12_b$, qui est alimentée.

Le distributeur 13 peut donc être commandé par une liaison 14 connectée aux seconds moyens moteurs 5.

En ce qui concerne le support balayant 4, il peut être guidé par une ou plusieurs glissières 15 et actionné par une vis sans fin 16, elle-même entraînée par les seconds moyens moteurs 5.

A titre d'exemple, on va décrire les caractéristiques d'un dispositif d'impression établi conformément à l'invention et réalisé pour une imprimante de télécopieur dont la capacité d'impression est de 12 000 lignes de format A4 par minute, soit quatre formats A4 par seconde.

Le tambour défilant tourne à 3 000 t/mn, et présente un diamètre de 200 mm et une longueur de 300 mm. Il permet donc d'imprimer deux formats 4A par tour.

Le support balayant 4 est équipé de douze groupes de têtes avec un rapport temps d'avance/temps d'impression égal à 2.

Les premiers moyens moteurs 2 sont constitués par un moteur à courant continu, régulé par une génératrice tachymétrique.

Le support balayant 4 est entraîné par la vis sans fin 16 qui est constituée par une vis à billes réversible. Cette vis est entraînée par les seconds moyens moteurs 5 à raison de 400 pas de 2,5 mm à la seconde par un moteur à courant continu et à capteur de position circulaire.

Quand le support balayant 4 a parcouru une largeur de 210 mm en 210 millisecondes, toute la couche magnétique 3 de la surface $1_a$ du tambour défilant 1 est imprimée magnétiquement et il est simultanément procédé à l'encrage par l'amenée de l'encre pulvérulente magnétique par les rampes de distribution $12_a$ ou $12_b$.

La surpression maintenue dans la partie centrale $4_c$ du support balayant 4 permet d'éviter tout encrassement de la zone d'impression magnétique où se trouvent les groupes de têtes A, B, C, D...

Ensuite, un calendrage, c'est-à-dire une élimination des particules d'encre magnétique en surplus, est effectué par un volet aspirant 17.

Puis, grâce aux moyens d'alimentation en papier 7, du papier ordinaire est amené en appui sur la surface $1_a$ du tambour défilant 1 dont la vitesse de rotation est alors ralentie à 400 t/mn en 60 millisecondes.

Le cycle peut alors recommencer.

Finalement, et quel que soit le mode de réalisation adopté, le dispositif d'impression conforme à l'invention présente, entre autres, les avantages suivants :

— longévité des têtes d'induction magnétique intégrées,
— absence d'entretien,
— vitesse d'impression élevée,
— coût de réalisation diminué,
— réalisation compacte.


## Revendications

1. Dispositif d'impression comportant un tambour défilant (1) animé d'un mouvement de défilement par l'action de premiers moyens moteurs (2), ledit tambour défilant présentant, sur sa surface $(1_a)$, une couche mince magnétique (3) ; un support balayant (4) animé d'un mouvement de va-et-vient pas à pas, perpendiculaire au mouvement de défilement du tambour défilant (1), par l'action de seconds moyens moteurs (5), ledit support balayant (4) portant un ou de préférence plusieurs groupes de têtes d'induction magnétique intégrées (A, B, C, D), ce groupe de têtes étant connecté à des moyens de commande séquentiels (10) ; des moyens d'alimentation (6) en encre pulvérulente magnétique ; et des moyens d'alimentation (7) en papier ordinaire, caractérisé par le fait que le support balayant (4) présente une forme annulaire entourant le tambour défilant (1) sur une partie importante au moins de son étendue circonférentielle, ce support balayant (4) comportant deux parties latérales $(4_a, 4_b)$ entourant une partie centrale $(4_c)$, les deux parties latérales $(4_a, 4_b)$ étant agencées pour créer une étanchéité entre elles et la surface $(1_a)$ du tambour défilant (1) ; par le fait que la partie centrale $(4_c)$ porte le ou les groupes de têtes d'induction magnétique intégrées (A, B, C, D) ; par le fait que des moyens d'alimentation (11) en gaz comprimé débouchent dans cette partie

centrale (4$_c$) ; et par le fait que les moyens d'alimentation (6) en encre pulvérulente magnétique débouchent à l'extérieur du support balayant (4).

2. Dispositif d'impression selon la revendication 1, caractérisé par le fait que les moyens d'alimentation (6) en encre pulvérulente comportent deux rampes de distribution (12$_a$, 12$_b$) disposées respectivement sur les côtés extérieurs des deux parties latérales (4$_a$, 4$_b$) du support balayant (4), des moyens de distribution (13) étant prévus pour alimenter en encre l'une ou l'autre des deux susdites rampes suivant le sens du mouvement de va-et-vient du support balayant.

3. Dispositif d'impression selon la revendication 2, caractérisé par le fait que les moyens de distribution (13) sont commandés par une liaison (14) connectée aux seconds moyens moteurs (5).

4. Dispositif d'impression selon l'une quelconque des revendications 1 à 3, caractérisé par le fait que le tambour défilant (1) est cylindrique.

5. Dispositif d'impression selon l'une quelconque des revendications 1 à 4, caractérisé par le fait que chaque partie latérale (4$_a$, 4$_b$) du support balayant (4) comporte au moins un joint d'étanchéité (8).

6. Dispositif d'impression selon l'une quelconque des revendications 1 à 5, caractérisé par le fait que la partie centrale (4$_c$) du support balayant (5) comporte plusieurs groupes de têtes d'induction magnétique intégrées (A, B, C, D) qui sont régulièrement répartis sur une circonférence de la surface interne de ladite partie centrale (4$_c$).

7. Dispositif d'impression selon la revendication 6, caractérisé par le fait que les groupes de têtes d'induction magnétique intégrées sont commandés simultanément.

8. Dispositif d'impression selon la revendication 6, caractérisé par le fait que les groupes de têtes d'induction magnétique intégrées sont commandés par permutation circulaire.

**Claims**

1. A printing device comprising a travelling drum (1) actuated into a travelling movement by the action of primary motor means (2), the said travelling drum presenting, on its surface (1$_a$), a thin magnetic layer (3) ; a scanning support (4) actuated into a step-by-step, to and fro movement, perpendicular to the travelling movement of the travelling drum (1), by the action of secondary motor means (5), the said scanning support (4) carrying one or preferably several groups of integrated magnetic induction heads (A, B, C, D), the group of heads being connected to sequential control means (10) ; magnetic particulate ink supply means (6) ; and plain paper supply means (7), wherein the scanning support (4) presents an annular shape surrounding the travelling drum (1) over a significant part at least of its circumferential length, the scanning support (4) comprising two lateral parts (4$_a$, 4$_b$) surrounding a central part (4$_c$), the two lateral

parts (4$_a$, 4$_b$) being arranged to create a watertight seal between themselves and the surface (1$_a$) of the travelling drum (1) ; wherein the central part (4$_c$) carries the group or groups of integrated magnetic induction heads (A, B, C, D) ; wherein compressed gas supply means (11) open into the central part (4$_c$) ; and wherein magnetic particulate ink supply means open to the outside of the scanning support (4).

2. A printing device according to Claim 1, wherein the magnetic particulate ink supply means (6) comprises two distribution strips (12$_a$, 12$_b$) arranged respectively on the outside sides of the two lateral parts (4$_a$, 4$_b$) of the scanning support (4), distribution means (13) being provided to supply with ink one or the other of the two said strips according to the direction of the to and fro movement of the scanning support.

3. A printing device according to Claim 2, wherein the distribution means (13) are controlled by a control line (14) connected to the secondary motor means (5).

4. A printing device according to anyone of Claims 1 to 3, wherein the travelling drum (1) is cylindrical.

5. A printing device according to anyone of Claims 1 to 4, wherein each lateral part (4$_a$, 4$_b$) of the scanning support (4) comprises at least one watertight joint (8).

6. A printing device according to anyone of Claims 1 to 5, wherein the central part (4$_c$) of the scanning support comprises several groups of integrated magnetic induction heads (A, B, C, D) which are regularly distributed over a circumference of the internal surface of the said central part (4$_c$).

7. A printing device according to Claim 6, wherein the groups of integrated magnetic induction heads are controlled simultaneously.

8. A printing device according to Claim 6, wherein the groups of integrated magnetic induction heads are controlled by circular permutation.

**Ansprüche**

1. Druckvorrichtung, enthaltend eine Lauftrommel (1), die von einer ersten Antriebseinrichtung (2) in eine Umlaufbewegung versetzt wird und auf ihrer Oberfläche (1$_a$) eine dünne magnetische Schicht (3) trägt, einen Ablenksupport (4), der von einer zweiten Antriebseinrichtung (5) in eine schrittweise Hin- und Herbewegung senkrecht zur Umlaufbewegung der Lauftrommel versetzt wird und eine Gruppe oder vorzugsweise mehrere Gruppen (A, B, C, D) von integrierten magnetischen Induktionsköpfen trägt, die mit einer sequentiellen Steuereinrichtung (10) verbunden sind, und eine Zuführeinrichtung (6) für pulverförmige magnetische Druckerschwärze sowie eine Zuführeinrichtung (7) für gewöhnliches Papier, dadurch gekennzeichnet, daß der Ablenksupport (4) eine ringförmige Gestalt hat, welche die Lauftrommel (1) wenigstens auf einem großen Teil ihres Umfanges umgibt, daß der Ablenksupport (4) zwei Seitenteile ($4_a$, $4_b$) hat, die einen Mittelteil ($4_c$) umgeben, wobei die Seitenteile ($4_a$, $4_b$) gegen die Oberfläche ($1_a$) der Lauftrommel (1) abgedichtet sind, daß der Mittelteil ($4_c$) die Gruppe bzw. Gruppen (A, B, C, D) von integrierten magnetischen Induktionsköpfen trägt und daß in diesen Mittelteil ($4_c$) eine Zuführeinrichtung (11) für komprimiertes Gas mündet, wogegen die Zuführeinrichtung (6) für die pulverförmige magnetische Druckerschwärze von außen her in den Ablenksupport (4) mündet.

2. Druckvorrichtung nach Anspruch 1, dadurch gekennzeichnet, daß die Zuführeinrichtung (6) für die pulverförmige magnetische Druckerschwärze zwei Verteilerauslässe ($12_a$, $12_b$) hat, die an den Außenseiten der beiden Seitenteile ($4_a$, $4_b$) des Ablenksupports (4) angeordnet sind, und daß eine Verteileinrichtung (13) vorgesehen ist, die je nach der Richtung der Hin- und Herbewegung des Ablenksupports (4) den einen oder anderen Verteilerauslaß versorgt.

3. Druckvorrichtung nach Anspruch 2, dadurch gekennzeichnet, daß die Verteileinrichtung (13) durch eine Wirkverbindung (14) mit der zweiten Antriebseinrichtung (5) gesteuert wird.

4. Druckvorrichtung nach einem der Ansprüche 1 bis 3, dadurch gekennzeichnet, daß die Lauftrommel (1) zylindrisch ist.

5. Druckvorrichtung nach einem der Ansprüche 1 bis 4, dadurch gekennzeichnet, daß jeder Seitenteil ($4_a$, $4_b$) des Ablenksupports (4) wenigstens eine Fugendichtung (8) aufweist.

6. Druckvorrichtung nach einem der Ansprüche 1 bis 5, dadurch gekennzeichnet, daß der Mittelteil ($4_c$) des Ablenksupports (4) mehrere Gruppen (A, B, C, D) von integrierten magnetischen Induktionsköpfen trägt, die über die innere Umfangsfläche des Mittelteiles ($4_c$) gleichmäßig verteilt sind.

7. Druckvorrichtung nach Anspruch 6, dadurch gekennzeichnet, daß die Gruppen von integrierten magnetischen Induktionsköpfen jeweils gleichzeitig beaufschlagt werden.

8. Druckvorrichtung nach Anspruch 6, dadurch gekennzeichnet, daß die Gruppen von integrierten magnetischen Induktionsköpfen in zyklischer Permutation beaufschlagt werden.

Fig.1.

# Fig.2.